# EUROPÄISCHE PATENTSCHRIFT

(11) **EP 1 340 008 B1**
(45) Veröffentlichungstag und Bekanntmachung des Hinweises auf die Patenterteilung: **07.12.2005**
(21) Anmeldenummer: 01998753.6
(22) Anmeldetag: 21.11.2001
(51) Int. Cl.: F16H 57/12

(54) **GETRIEBE-ANTRIEBSEINHEIT**
TRANSMISSION DRIVE UNIT
UNITE DE COMMANDE D'UNE TRANSMISSION

(30) Priorität: 30.11.2000 DE 10059756
(43) Veröffentlichungstag der Anmeldung: 03.09.2003
(73) Patentinhaber: ROBERT BOSCH GMBH, 70442 Stuttgart (DE)
(72) Erfinder: FORNOFF, Dieter, 76356 Weingarten (DE); MEYER, Christian, 76228 Karlsruhe-Wolfartsweiler (DE)
(86) Internationale Anmeldenummer: PCT/DE2001/004393
(87) Internationale Veröffentlichungsnummer: WO 2002/044591

(56) Entgegenhaltungen:
- EP-A- 0 541 023
- DE-A- 3 015 573
- DE-A- 3 708 100
- US-A- 4 771 654

## Beschreibung

### Stand der Technik

Die Erfindung betrifft eine Getriebe-Antriebseinheit nach der Gattung des unabhängigen Anspruchs.

Mit der DE 198 04 502 A1 ist eine Welle mit einer axial fixierten Nabe bekannt geworden, die beispielsweise auch in einer Getriebe-Antriebseinheit Verwendung finden kann. Häufig ist eine Nabe beispielsweise axial mit einem Sicherungsring in der Nut einer Welle fixiert, wodurch die Nabe aufgrund einer großen Toleranzkette ein großes Axialspiel von bis zu 1,0 mm aufweist. Dieses Axialspiel wird in der DE 198 04 502 A 1 dadurch eliminiert, dass eine Federscheibe, die sich in umlaufenden Rillen der Welle abstützt, die Nabe gegen einen Anschlag des Gehäuses drückt. Nachteilig bei dieser Lösung ist, dass zwar das Axialspiel beseitigt wird, aber die absolute Lage der äußeren Stirnseite der Nabe einem großen Toleranzbereich unterworfen ist. Außerdem ist es baulich oft nicht möglich oder gewünscht, einen Anschlag am Gehäuse zur Abstützung der Nabe zu realisieren.

Die DE 37 08 100 A1 beschreibt eine Vorrichtung zum Ausschalten des Zahnflankenspiels zweier miteinander in Eingriff befindlicher Zahnradpaare in einem Geschwindigkeits-Wechselgetriebe. Dabei ist aufeiner Lagerhülse ein Zahnrad mit jeweils axial anliegenden Reibscheiben angeordnet. Zur Ausbildung einer Reibkupplung wird eine auf der Lagerhülse angeordnete Schraubenfeder gegen eine der Reibscheiben gedrückt, wodurch das Zahnrad reibschlüssig gegen einen auf der Lagerhülse angeordneten Sicherungsring gepresst wird.

Vorteile der Erfindung

Die erfindungsgemäße Vorrichtung mit den Merkmalen des Anspruchs 1 hat demgegenüber den Vorteil, dass das Axialspiel eines Abtriebsrades eliminiert ist, und die Stirnseite des Abtriebsrades gleichzeitig eine exakt definierte axiale Position einnimmt. Dies wird ermöglicht, indem ein elastisches Element das Abtriebsrad axial gegen einen äußeren Anschlag auf der Achse drückt. Dadurch bildet die Stirnseite des Abtriebsrades eine exakt definierte Schnittstelle für den Eingriff eines korrespondierenden Getriebeteils. Diese maximale Getriebeüberdeckung reduziert den Abrieb der Getriebeteile und erhöht deren Lebensdauer. Durch die klar definierte Schnittstelle der Stirnseite des Abtriebsrades ist eine einfache Kombination mit verschiedenen korrespondierenden Getriebeteilen möglich. Die definierte Betriebsposition des Abtriebsrades gewährleistet einen zuverlässigen, geräuscharmen Betrieb der Getriebe-Antriebseinheit.

Durch die in den Unteransprüchen angegebenen Maßnahmen sind vorteilhafte Weiterbildungen der Vorrichtung nach dem Hauptanspruch möglich. So ist es besonders günstig, das Abtriebsrad mit einer Schraubendruckfeder gegen den axialen Anschlag zu drücken, da diese eine lineare Federkennlinie aufweist und einfach zu fertigen und zu montieren ist. Unabhängig von der Einbaulage der Getriebe-Antriebseinheit steht somit das Abtriebsrad ständig unter einer Vorspannung, was eine definierte axiale Schnittstelle gewährleistet.

Wird das elastische Element im Inneren des Abtriebsrades angeordnet, kann sich der dem Getrieberad zugewandte Teil des Abtriebsrades vorteilhafterweise in Eingriff mit diesem befinden. Außerdem wird dadurch eine kompakte Bauweise der Getriebe-Antriebseinheit ermöglicht.

Besonders vorteilhaft ist es, wenn der axiale Anschlag durch einen Sicherungsring gebildet wird, der in eine Nut in der Achse eingreift. Da die Nut auf der Achse sehr maßgenau gefertigt werden kann, und die Toleranzen für die Dicke des Sicherungsrings auch sehr gering gehalten werden können, kann durch das Anpressen des Abtriebsrades gegen den Sicherungsring eine exakt positionierte Stirnfläche des Abtriebsrades realisiert werden. Ebenso ist die Herstellung und Montage eines solchen Nut-Sicherungsring-Systems sehr günstig.

Die Bildung einer definierten Schnittstelle durch die exakte axiale Positionierung der äußeren Stirnseite des Abtriebsrades erlaubt das problemlose Anfügen der Getriebe-Antriebseinheit an ein komplexeres System mit einer maximalen Getriebeüberdeckung an dieser Schnittstelle. Dadurch wird der Abrieb der beiden Getriebeteile deutlich reduziert.

Weist die äußere Stirnseite einen definierten maßgenauen Abstand zu einer Anschlagsfläche am Getriebegehäuse auf, so schafft man ein kompatibles definiertes Anschlußmaß zur Anfügung von verschiedenen Systemen an diese Anschlagsfläche.

Enfindungsgemäß ist die Ausführung des Abtriebsrades mit einer Außenverzahnung, da diese einerseits auf der dem Getrieberad zugewandten Seite in die Innenverzahnung desselben eingreift und andererseits zur äußeren Stirnseite hin ein Abtriebsritzel für verschiedene Anwendungsmöglichkeiten anbietet.

Zeichnung

In der Zeichnung ist ein Ausführungsbeispiel einer erfindungsgemäßen Vorrichtung dargestellt und in der nachfolgenden Beschreibung näher erläutert.

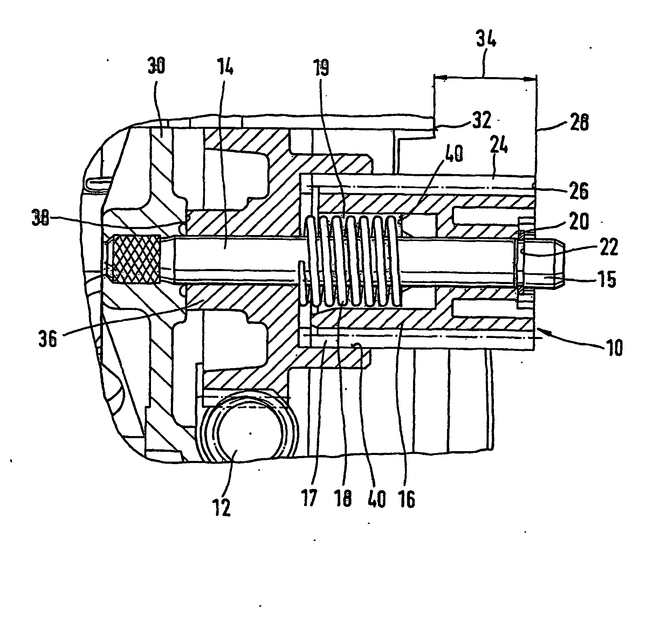

Figur 1 zeigt im Axialschnitt ein Ausführungsbeispiel einer Getriebe-Antriebseinheit im Ausschnitt.

### Beschreibung

Das in Figur 1 dargestellte Ausführungsbeispiel zeigt einen Ausschnitt einer erfindungsgemäßen Getriebe-Antriebseinheit 10, mit einem Getriebegehäuse 30, in das drehfest eine Achse 14 eingespritzt ist. Ein von einem nicht dargestellten Motor angetriebenes Antriebsrad 12, das als Schnecke ausgebildet ist, kämmt mit einem Getrieberad 36, das auf der Achse 14 gelagert ist. Das Getrieberad 36 stützt sich axial zur eingespritzten Seite der Achse 14 hin gegen eine Auflagefläche 38 des Getriebegehäuses 30 ab. Zum freien Ende der Achse 14 hin weist das Getrieberad 36 eine Innenverzahnung 40 auf, in die die Außenverzahnung 24 eines Abtriebsrades 16 eingreift. Die Achse 14 weist an ihrem freien Ende 15 eine umlaufende Nut 22 auf, in die ein Sicherungsring 20 eingreift. Dieser Sicherungsring 20 stellt einen definierten axialen Anschlag 20 dar, gegen den das Abtriebsrad 16 gedrückt wird. Zur Anpressung des Abtriebsrades 16 mittels eines elastischen Elements wird eine Druckfeder 18 verwendet, die im Innenraum 19 des Abtriebsrades 16 auf der Achse 14 angeordnet ist. Die Druckfeder 18 stützt sich auf der achsfesten Seite gegen das Getrieberad 36 und zum freien Ende 15 der Achse 14 hin gegen eine Innenfläche 40 des Abtriebsrades 16 ab, wodurch dieses gegen den Sicherungsring 20 gepreßt wird. Durch die Druckfeder 18 wird der Sicherungsring 20 immer gegen die Wand der Nut 22 zum freien Ende 15 der Achse 14 hin gedrückt, wodurch die auftretenden Toleranzen der Nut 22 egalisiert werden. Die Außenverzahnung 24 des Abtriebsrades 16 erstreckt sich bis zu einer äußeren Stirnseite 26 desselben. Durch die ständige Anfederung des Abtriebsrades 16 ist somit eine definierte Betriebsposition der Stirnseite 26 gewährleistet. Damit bildet diese äußere Stirnseite 26 eine definierte Schnittstelle 28, die einen definierten Abstand 34 zu einer Anschlagsfläche 32 des Getriebegehäuses 30 aufweist. Damit ist die Position der Stirnfläche 26 sowohl bezüglich der Achse 14 als auch gegenüber der Anschlagsfläche 32 exakt vorgegeben. Es tritt kein Spiel oder Toleranz durch die axiale Lagerung des Abtriebsrades 16 auf. Die Erstreckung der Außenverzahnung 24 bis zu der definierten Schnittstelle 28 ermöglicht eine maximale Überdeckung mit einem korrespondierenden Getriebeteil, das an der Schnittstelle 28 angefügt wird.

Im Ausführungsbeispiel kann dies beispielsweise eine Getriebestange oder ein Antriebsritzel für einen Verstellantrieb im Kraftfahrzeug wie z.B. Schiebedach, Fensterheber, Sitzverstellung oder Kupplungssteller sein. Dabei wird die Getriebe-Antriebseinheit 10 vorzugsweise mit der Anschlagsfläche 32 des Getriebegehäuses 30 an ein korrespondierendes System angeflanscht.

In einem alternativen Ausführungsbeispiel ist das elastische Element 18 zwischen der Auflagefläche 38 des Getriebegehäuses 30 und dem Getrieberad 36 angeordnet. Die elastischen Elemente 18 sind dabei Wellscheiben, Tellerfedern oder Druckfedern, die sowohl das Getrieberad 36 als auch mit diesem das Abtriebsrad 16 gegen einen axialen Anschlag 20 drücken. In einer weiteren Variation kann auch das Abtriebsrad 16 mit dem Getrieberad 36 einstückig ausgebildet sein.

Auch die Ausführung des axialen Anschlags 20 ist nicht auf einen Sicherungsring beschränkt, sondern ist lediglich dadurch gekennzeichnet, dass der Anschlag exakt auf Maß gefertigt werden kann. Dies kann beispielsweise auch durch eine Bohrung in der Achse 14 mit einem entsprechenden Splint oder mittels exakter Materialverformung der Achse 14 realisiert werden. Auch die Ausformungen der elastischen Elemente 18 im Inneren 19 des Abtriebsrades 16 können variieren und auch eine Kombination verschiedener elastischer Elemente 18 darstellen. Die Anwendung der erfindungsgemäßen Getriebe-Antriebseinheit 10 ist selbstverständlich nicht auf Verstellantriebe im Kraftfahrzeug beschränkt.

## Patentansprüche

1. Getriebe-Antriebseinheit (10) mit einem Getriebegehäuse (30), einem Antriebsrad (12) und mindestens einem auf einer Achse (14) gelagerten, eine Stirnseite (26) aufweisendem Abtriebsrad (16), wobei mindestens ein elastisches Element (18) vorgesehen ist, das das Abtriebsrad (16) gegen einen definierten axialen Anschlag (20) drückt, wobei das Getriebegehäuse (30) eine Anschlagsfläche (32) zum Anflanschen an ein korrespondierendes System aufweist, und die Stirnseite (26) eine definierte Schnittstelle 28 bildet, an die ein korrespondierendes Getriebebauteil des korrespondierenden Systems, beispielsweise eine Getriebestange oder ein Antriebsritzel eines Verstellantriebs im Kraftfahrzeug, anfügbar ist, wobei das Abtriebsrad (16) eine Außenverzahnung (24) aufweist, die sich bis zu dessen äußeren Stirnseite (26) erstreckt.

2. Getriebe-Antriebseinheit (10) nach Anspruch 1, **dadurch gekennzeichnet, dass** das mindestens eine elastische Element (18) eine Schraubendruckfeder ist, die auf der Achse (14) angeordnet ist.

3. Getriebe-Antriebseinheit (10) nach einem der Ansprüche 1 oder 2, **dadurch gekennzeichnet, dass** das mindestens eine elastische Element (18) im wesentlichen im Inneren (19) des Abtriebsrades (16) angeordnet ist.

4. Getriebe-Antriebseinheit (10) nach einem der Ansprüche 1 bis 3, **dadurch gekennzeichnet, dass** der axiale Anschlag (20) durch einen Sicherungsring gebildet ist, der in eine Nut (22) der Achse (14) greift.

5. Getriebe-Antriebseinheit (10) nach einem der Ansprüche 1 bis 4, **dadurch gekennzeichnet, dass** die äußere Stirnseite (26) des gegen den Anschlag (20) gedrückten Abtriebsrades (16) eine definierte Schnittstelle (28) zu einem korrespondierendem Getriebeteil darstellt, das mit dem Abtriebsrad (16) in Wirkverbindung steht.

6. Getriebe-Antriebseinheit (10) nach einem der Ansprüche 1 bis 5, **dadurch gekennzeichnet, dass** die äußere Stirnseite (26) des Abtriebsrades (16) einen definierten Abstand (34) zu der Anschlagsfläche (32) hat.

## Claims

1. Transmission/drive unit (10) with a transmission case (30), with a driving wheel (12) and with at least one driven wheel (16) mounted on an axle (14) and having an end face (26), there being provided at least one elastic element (18) which presses the driven wheel (16) against a defined axial stop (20), the transmission case (30) having a stop face (32) for flanging to a corresponding system, and the end face (26) forming a defined interface (28) to which a corresponding transmission component of the corresponding system, for example a transmission rod or a driving pinion of an adjusting drive in the motor vehicle, can be attached, the driven wheel (16) having an external toothing (24) which extends as far as its outer end face (26).

2. Transmission/drive unit (10) according to Claim 1, **characterized in that** the at least one elastic element (18) is a helical compression spring which is arranged on the axle (14).

3. Transmission/drive unit (10) according to either one of Claims 1 and 2, **characterized in that** the at least one elastic element (18) is arranged essentially in the interior (19) of the driven wheel (16).

4. Transmission/drive unit (10) according to one of Claims 1 to 3, **characterized in that** the axial stop (20) is formed by a securing ring which engages into a groove (22) of the axle (14).

5. Transmission/drive unit (10) according to one of Claims 1 to 4, **characterized in that** the outer end face (26) of the driven wheel (16) pressed against the stop (20) constitutes a defined interface (28) with respect to a corresponding transmission part which is operatively connected to the driven wheel (16).

6. Transmission/drive unit (10) according to one of Claims 1 to 5, **characterized in that** the outer end face (26) of the driven wheel (16) is at a defined distance (34) from the stop face (32).

## Revendications

1. Unité d'entraînement pour transmission (10) comportant un boîtier de protection (30), une roue motrice d'entrée (12) et au moins une roue motrice de sortie (16) montée sur un axe (14) et munie d'un côté frontal (26),
comportant au moins un élément élastique (18) qui pousse la roue motrice de sortie (16) contre une butée (20) axiale définie, le boîtier de protection (30) présentant une surface d'arrêt (32) à brider contre un système correspondant et le côté frontal (26) formant une interface (28) définie à laquelle peut être ajouté un composant de transmission correspondant du système correspondant, par exemple une tige de transmission ou un pignon d'entraînement d'un entraînement de manoeuvre dans le véhicule automobile, la roue motrice de sortie (16) ayant une denture extérieure (24) qui s'étend jusqu'à son côté frontal (26) extérieur.

2. Unité d'entraînement pour transmission (10) selon la revendication 1,
**caractérisée en ce que**
l'élément élastique (18) est un ressort cylindrique de compression placé sur l'axe (14).

3. Unité d'entraînement pour transmission (10) selon l'une des revendications 1 à 2,
**caractérisée en ce que**
l'élément élastique (18) est principalement placé à l'intérieur (19) de la roue motrice de sortie (16).

4. Unité d'entraînement pour transmission (10) selon l'une des revendications 1 à 3,
**caractérisée en ce que**
la butée (20) axiale est formée par une bague de retenue qui pénètre dans une rainure (22) de l'axe (14).

5. Unité d'entraînement pour transmission (10) selon l'une des revendications 1 à 4,
**caractérisée en ce que**
le côté frontal (26) extérieur de la roue motrice de sortie (16) poussée contre la butée (20) représente une interface (28) définie par rapport à une pièce de transmission correspondante en liaison active avec la roue motrice de sortie (16).

6. Unité d'entraînement pour transmission (10) selon l'une des revendications 1 à 5,
**caractérisée en ce que**
le côté frontal (26) extérieur de la roue motrice de sortie (16) a une distance (34) définie par rapport à la surface d'arrêt (32).
